# EUROPÄISCHE PATENTSCHRIFT

(11) **EP 1 110 590 B1**
(45) Veröffentlichungstag und Bekanntmachung des Hinweises auf die Patenterteilung: **02.04.2014**
(21) Anmeldenummer: 00121914.6
(22) Anmeldetag: 07.10.2000
(51) Int. Cl.: B01D 29/21, B01D 29/96, B01D 35/147, B01D 35/153

(54) **Flüssigkeitsfilter mit Ablass für Flüssigkeitsrückstände**
Liquid filter with drain for liquid residues
Filtre de liquide à dispositif de vidange de résidus liquides

(30) Priorität: 21.12.1999 DE 19961580
(43) Veröffentlichungstag der Anmeldung: 27.06.2001
(73) Patentinhaber: Mann + Hummel GmbH, 71638 Ludwigsburg (DE)
(72) Erfinder: Jainek, Herbert, 74074 Heilbronn (DE); Weindorf, Martin, 70806 Kornwestheim (DE)
(74) Vertreter: Seyboth, Matthias

(56) Entgegenhaltungen:
- EP-A- 0 839 563
- FR-A- 1 544 964
- US-A- 5 614 090
- US-A- 5 660 726
- US-A- 5 888 384

## Beschreibung

### Stand der Technik

Die Erfindung betrifft einen Flüssigkeitsfilter, insbesondere für das Schmieröl einer Brennkraftmaschine, welcher ein topfförmiges Gehäuse mit Schraubdeckel aufweist, wobei im Schraubdeckel ein Ablaß für Flüssigkeitsrückstände untergebracht ist, nach der Gattung des Patentanspruches 1. Außerdem betrifft die Erfindung eine Filterpatrone, die zum Einbau in den Flüssigkeitsfilter geeignet ist, nach der Gattung des Patentanspruches 10.

Ein derartiger Flüssigkeitsfilter ist z. B. aus der DE 196 44 647 A1 bekannt. Dieser Filter hat ein topfförmiges Gehäuse, dessen Einbauöffnung für die Filterpatrone nach unten weist und in den nach Einbau der Filterpatrone ein Schraubdeckel eingeschraubt werden kann. Einlaß und Auslaß für den Filter befinden sich im Gehäusetopf, d. h. im oberen Teil des Filtergehäuses. Dadurch ist das Gehäuse und insbesondere der Schraubdeckel auch außerhalb der Betriebszeit immer mit der zu filternden Flüssigkeit gefüllt. Dies erschwert einen Wechsel der Filterpatrone, da diese Restflüssigkeit beim Aufschrauben des Deckels in die Umwelt gelangen kann. Deswegen ist im Schraubdeckel an seinem geodätisch tiefsten Punkt eine Ablaßschraube vorgesehen, welche zunächst gelöst werden kann, um den Flüssigkeitsrest im Schraubdeckel zu entfernen. Hierdurch wird der Wechsel der Filterpatrone wesentlich erleichtert.

Aus der EP 0 839 563 A1 ist ein Fluidfilter mit einem Ablaufventil bekannt. Das Filtergehäuse des Fluidfilters weist zwei Gehäuseabschnitte auf, die lösbar miteinander verbunden sind. In dem Gehäuse ist ein Filterelement zur Reinigung eines Fluids aufgenommen. Im montierten Zustand verschließt eine Ventilstange ein Durchgangsloch an der Stirnseite eines Gehäuseteils. Beim Lösen der Gehäuseabschnitte voneinander öffnet Ventil das Durchgangsloch zur Ableitung des in dem Gehäuse befindlichen Fluides. Die Ventilstange wird aufgrund der Kraft eines Betätigungselememtes (16) aus der Bohrung geschoben. Das Durchgangsloch bleibt nach der Trennung der Gehäuseabschnitte geöffnet.

Die Schrift US 5,888,384 offenbart einen Fluidfilter mit einem topfförmigen Gehäuse und einem darin angeordneten Filterelement. Der Filterdeckel wird in einen Anschlussflansch geschraubt. Zur Entleerung des Filtergehäuses bei einem Wechsel des Filterelementes ist zunächst eine Ablassschraube zu öffnen, um das Fluid aus dem Gehäuse zu entfernen.

Der vorgeschlagene Flüssigkeitsfilter wird insbesondere als Ölfilter im Einsatz von Brennkraftmaschinen verwendet. Hier sind die Platzverhältnisse aufgrund anderer Komponenten im Motorraum häufig sehr beengt. Deswegen ist ein Betätigen der Ablaßschraube häufig mit Problemen verbunden. Außerdem muß das aus der Ablaßöffnung herauslaufende Öl aufgefangen werden. Auch dieses ist aufgrund der be engten Einbausituation häufig nur unter erschwerten Bedingungen möglich. Da ein Auffangbehälter mit genügendem Volumen nicht unter der Ablaßöffnung plaziert werden kann.

Aufgabe der Erfindung ist es daher, einen Flüssigkeitsfilter mit einem Flüssigkeitsablaß im Schraubdeckel zu schaffen, welcher sich auch bei beengter Einbaubedingung zuverlässig entleeren läßt. Diese Aufgabe wird durch die Merkmale des Patentanspruches 1 gelöst. Außerdem wird gemäß Patentanspruch 8 eine Filterpatrone beansprucht, die bei Einbau in einen Flüssigkeitsfilter die Aufgabe zu lösen vermag.

### Vorteile der Erfindung

Das erfindungsgemäße Flüssigkeitsfilter ist zum Einbau in hängender Position gedacht. Das heißt, daß die durch den Gehäusetopf gebildete und durch den Schraubdeckel zu verschließende Einbauöffnung für die Filterpatrone nach unten weist. Dabei muß die Gehäuseachse nicht senkrecht stehen, es ist auch möglich, das Gehäuse derart auszurichten, daß die Gehäusemittelachse schräg nach unten weist. Der Gehäusetopf muß kein gesondertes Bauteil sein. Es ist auch denkbar, daß dieser durch ein anderes Bauteil, z. B. den Motorblock mitgebildet wird.

Im Schraubdeckel ist ein Ablaß für Flüssigkeitsrückstände vorgesehen, welcher bei dem bereits beschriebenen Filter durch eine Ventilstange gebildet wird, die die Ablauföffnung über eine Dichtung verschließt. Die Dichtung kann z. B. ein O-Ring sein, es ist aber auch möglich, daß die Ventilstange aufgrund einer entsprechenden Materialwahl als solche Dichtfunktionen übernimmt. Die Ventilstange ist derart mit dem Gehäusetopf verbunden, daß deren Axialspiel bezogen auf die Mittelachse des Gehäuses begrenzt ist. Hierunter ist auch die Möglichkeit zu verstehen überhaupt kein Axialspiel für die Ventilstange vorzusehen. Diese kann z. B. mit dem Gehäusetopf verschraubt oder verrastet werden. Wird der Schraubdeckel, in dem die runde Ablauföffnung untergebracht ist, gelöst, so bewegt sich dieser relativ zur Ventilstange deren axiale Bewegung begrenzt ist. Dadurch wird die Dichtung der Ventilstange aus der Ablauföffnung herausgezogen und diese automatisch zum Ablauf der Flüssigkeitsrückstände freigegeben. Sobald die Flüssigkeit abgelaufen ist, kann der Schraubdeckel vollständig vom Gehäusetopf abgeschraubt werden, um anschließend die Filterpatrone zu wechseln.

Der Vorteil dieser erfindungsgemäßen Lösung liegt darin, daß die Ablauföffnung automatisch durch teilweises Aufschrauben des Schraubdeckels geöffnet wird. Daher muß der Verschluß der Ablauföffnung nicht für spezielle Werkzeuge, z. B. einen Schraubenschlüssel, zugänglich sein. Da der Aktionsraum eines Öffnungswerkzeuges für die Ablauföffnung nicht beachtet werden muß, kann das erfindungsgemäße Flüssigkeitsfilter auch in beengenden Platzsituationen eingebaut werden. Hierdurch ergibt sich eine größere geometrische Gestaltungsfreiheit der Brennkraftmaschine.

Eine günstige Ausführungsform der Erfindung ergibt sich, wenn die Ventilstange an ein Stützrohr montiert wird, welches seinerseits im Gehäusetopf befestigt ist. Hierdurch ist ebenfalls die Begrenzung des Axialspiels der Ventilstange im Bezug auf den Gehäusetopf gegeben. Ein Stützrohr muß in den meisten Anwendungsfällen vorgesehen werden, um die Filterpatrone gegen die am Filtermedium vorliegenden Druckunterschiede abzustützen. Wird die Ventilstange direkt am Stützrohr befestigt, kann sie kürzer ausgelegt werden, als bei einer Befestigung im Gehäusetopf. Daher erhöht sich die Stabilität der Ventilstange und es wird Material eingespart. Dies führt letztendlich auch zu einer Erhöhung der Wirtschaftlichkeit der Lösung.

Eine besonders günstige Ausführungsform der Erfindung ergibt sich, wenn das Stützrohr sowohl mit dem Gehäusetopf als auch mit dem Schraubdeckel lösbar verbunden ist. Hierbei muß bei der Verbindung mit dem Schraubdeckel ein Axialspiel vorgesehen sein, welches durch Aufschrauben des Deckels an einem Axialanschlag endet. Die Befestigung im Schraubdeckel darf weiterhin nur in axialer Richtung und nicht in radialer Richtung erfolgen, damit ein Aufschrauben des Deckels möglich ist. Der Axialspielbereich, der durch die Anschläge im Schraubdeckel gebildet wird, muß kleiner sein, als die zur Öffnung der Ablauföffnung notwendige Axialbewegung des Schraubdeckels. Damit wird erreicht, daß das Stützrohr beim Öffnen des Schraubdeckels zunächst im Gehäusetopf verbleibt, so daß die Ventilstange in der bereits beschriebenen Weise aus der Ablauföffnung im Schraubdeckel gezogen wird. Nun kann der Flüssigkeitsrückstand aus dem Schraubdeckel auslaufen. Wird der Deckel weiter geöffnet, so erreicht das Stützrohr den Axialanschlag im Schraubdeckel, wobei das Lösen dieses Axialanschlages eine größere Lösekraft beansprucht, als der Einspannung des Stützrohrs im Gehäusetopf. Daher verbleibt das Stützrohr bei der Demontage des Flüssigkeitsfilter im Schraubdeckel. Bei einer entsprechenden Befestigung der Filterpatrone verbleibt diese am Stützrohr, und kann somit ebenfalls zusammen mit dem Schraubdeckel aus dem Gehäusetopf entfernt werden. Hierdurch ist vor allen Dingen bei beengten Einbaubedingungen ein unkomplizierter Wechsel des Filters möglich. Insbesondere werden die letzten von der Filterpatrone tropfenden Ölrückstände von dem Deckel aufgefangen, wodurch ein noch sauberer Filterwechsel möglich wird.

Besonders vorteilhaft ist die Kombination der beiden erfinderischen Lösungen für den beengten Einbauraum. Dies bedeutet, daß die Ablauföffnung durch Aufschrauben des Deckels automatisch geöffnet wird, und durch Vorsehen einer Ableitungseinrichtung der auslaufende Flüssigkeitsrest zu einem Auffangbehälter geleitet werden kann. Für die Integration der Ableitungseinrichtung, insbesondere des Ableitungsschlauches, an den mit einer Ventilstange versehenen Ablauf sind zwei Möglichkeiten besonders vorteilhaft.

Der Schlauchstutzen zur Anbringung des Ableitungsschlauches kann durch die Ablauföffnung im Schraubdeckel selbst gebildet sein. Dieser Schlauchstutzen weist nach außen, so daß vor dem Aufschrauben des Schraubdeckels ein Schlauch befestigt werden kann. Durch dessen Flexibilität ist es möglich den Schraubdeckel einige Umdrehungen zu drehen, so daß die Ablauföffnung automatisch geöffnet wird.

Eine andere Möglichkeit besteht darin, die Ventilstange am Ende mit einem rohrförmigen Auslaufende zu versehen. Dieses bildet die Ablauföffnung und ist mit Durchbrüchen versehen. Im eingebauten Zustand der Filterpatrone sind die Durchbrüche von einer Durchführung im Schraubdeckel verdeckt. Durch Aufschrauben des Deckels wandern die Durchbrüche in den Innenraum des Schraubdeckels, wodurch die Restflüssigkeit durch die Durchbrüche in das Auslaufende gelangen kann. Auf diese Weise ist eine Ableitung der Restflüssigkeit möglich.

Es ist vorteilhaft, das Auslaufende als Schlauchstutzen auszuführen. An dieses kann in der bereits beschriebenen Weise der Auslaufschlauch angebracht werden. Dies hat den zusätzlichen Vorteil, daß sich die Ventilstange beim Aufschrauben des Schraubdeckels nicht mitdreht. Dies vereinfacht die Handhabung beim Filterwechsel, da der Schlauch vor dem Aufschrauben des Schraubdeckels an eine zugängliche Stelle geführt werden kann und auch während der Schraubbewegung dort verbleibt.

Um auch die Betriebssicherheit des Filters zu erhöhen, kann in dem Stützrohr ein Umgehungsventil vorgesehen werden. Ist das Stützrohr über einen Axialanschlag mit dem Schraubdeckel verbunden, muß diese Verbindung jedoch flüssigkeitsdurchlässig ausgeführt sein, um einen Zugang zu dem Umgehungsventil zu ermöglichen. Andernfalls könnte die umgehende Flüssigkeit nicht in den durch das Stützrohr gebildeten Innenraum gelangen, wodurch die Filterumgehung erst möglich wird.

Die zum beschriebenen Filterwechsel nötige Filterpatrone kann erfindungsgemäß zum Einbau in diesen Flüssigkeitsfilter vorher mit einem Stützrohr ausgestattet werden, in das die Ventilstange integriert ist. Das Stützrohr kann lösbar oder unlösbar mit der Filterpatrone verbunden sein. Eine Abdichtung zwischen Filterpatrone und Stützrohr kann direkt durch die Endscheiben der Filterpatrone erfolgen. Das Stützrohr kann aber auch in mindestens eine der Endscheiben eingegossen sein, wodurch eine unlösbare Verbindung entsteht. In diesem Fall wird das Stützrohr immer zusammen mit dem Filterelement ausgewechselt.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den Längsschnitt durch den erfindungsgemäßen Filter mit einer an das Stützrohr angebrachten Ventilstange und Schlauchanschluß,
- Figur 2: eine andere Variante des Details X gem. Figur 1, wobei der Schlauchstutzen in die Ventilstange integriert ist,
- Figur 3: die Ventilstange gem. Figur 2 im geöffneten Zustand,
- Figur 4: den Ausschnitt eines Filterelementes, bei dem das Stützrohr mit der Ventilstange in die Filterpatrone integriert ist in eingebautem Zustand, wobei das Filtergehäuse geschnitten dargestellt ist und
- Figur 5: die Ventilstange gemäß Figur 4 mit aufgestecktem Schlauch und im geöffneten Zustand.

### Beschreibung der Ausführungsbeispiele

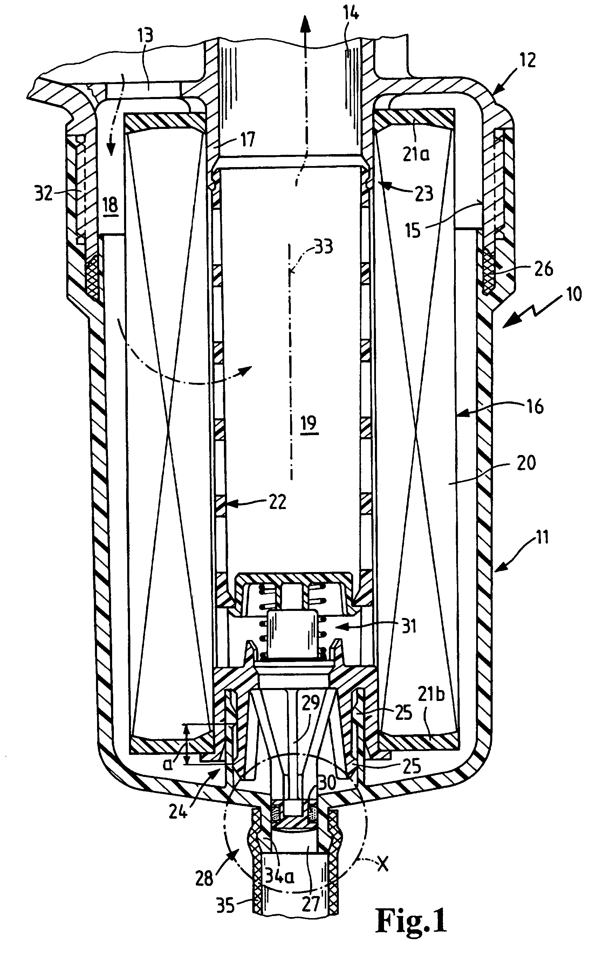

Der in Figur 1 dargestellte Filter besteht aus einem Gehäuse 10, welches einen Schraubdeckel 11 umfaßt, welcher in einen Gehäusetopf 12 eingeschraubt ist. Der Gehäusetopf ist als Teil eines nicht weiter dargestellten Motorblocks ausgeführt. Über diesen Motorblock sind auch ein Einlaß 13 und ein Auslaß 14 für das zu filternde Schmieröl der Brennkraftmaschine realisiert.

Der Gehäusetopf weist eine nach unten zeigende Einbauöffnung 15 auf, die den Einbau einer Filterpatrone 16 gestattet. Diese wird zur Montage auf einen Stutzen 17 geschoben, wodurch eine Abdichtung zwischen einer Rohseite 18 und einer Reinseite 19 des Filtermediums 20 erreicht wird. Die Abdichtung erfolgt über die elastisch ausgeführte obere Endscheibe 21 a. Die untere Endscheibe 21 b wird über ein Stützrohr 22 abgedichtet, welches nach der Montage der Filterpatrone 16 auf dem Stutzen 17 in die Reinseite 19 der Filterpatrone eingeschoben werden kann, wobei eine Schnappverbindung 23 zwischen Stützrohr 22 und Stutzen 17 einrastet. Anschließend kann der Schraubdeckel von unten aufgeschraubt werden, wobei hierbei eine mit einem Axialspielbereich a versehene Axialfixierung 24 geschlossen wird. Der Axialspielbereich a ergibt sich durch entsprechend beabstandete Nasen 25, die einerseits im Schraubdeckel und andererseits im Stützrohr untergebracht sind. Der Schraubdeckel wird gegen den Gehäusetopf über eine Formdichtung 26 abgedichtet. Weiterhin muß eine Ablauföffnung 27 eines Ablasses 28 im Boden des Schraubdeckels 11 abgedichtet werden. Hierzu ist das Stützrohr 22 mit einer Ventilstange 29 versehen, deren Ende in die Ablauföffnung 27 hineinreicht und diese über eine Dichtung 30 verschließt.

Die Flußrichtung des zu reinigenden Schmieröls durch den Filter während des normalen Betriebs ist durch Pfeile angedeutet. Die Filterpatrone 16 wird von außen nach innen durchströmt, wodurch eine Fluidströmung vom Einlaß 13 zum Auslaß 14 möglich wird. Zusätzlich ist im Stützrohr 22 ein Umgehungsventil 31 angeordnet, welches bei einem unzulässigen Ansteigen des Differnzdrucks zwischen Reinseite 19 und Rohseite 18 öffnet, wodurch die Versorgung der Brennkraftmaschine mit Schmieröl garantiert ist.

Bei einem Wechsel der Filterpatrone 16 wird der Schraubdeckel 11 zunächst um einige Drehungen vom Gehäusetopf 12 gelöst. Dabei entsteht eine Axialverschiebung des Schraubdeckels, die kleiner sein muß als der Axialspielbereich a. Ein Gewinde 32 zwischen Schraubdeckel 11 und Gehäusetopf 12 muß länger ausgeführt sein, als der Axialspielbereich a. Daher bleibt nach den ersten Umdrehungen des Schraubdeckels dieser noch mit dem Gehäusetopf verbunden. Durch die Schnappverbindung 23 steht das Stützrohr 22 weiterhin fest im Gehäusetopf 12. Da die Ablauföffnung 27 genau in einer Mittelachse 33 des Gehäuses 10 angeordnet, ist zwischen Ventilstange 29 und dem die Ablauföffnung 27 enthaltenden Schraubdeckel 11 sowohl eine axiale als auch eine radiale Relativbewegung möglich. Durch Aufschrauben des Deckels wird daher die Ventilstange 29 aus der Ablauföffnung 27 herausgezogen, wodurch das im Schraubdeckel befindliche Restöl ablaufen kann. Um eine problemlose Ableitung des Restöls zu gewährleisten, ist die Ablauföffnung 27 mit einem Schlauchstutzen 34a versehen. Auf diesen kann vor der Öffnung des Ablasses ein Schlauch 35 aufgesteckt werden, der in ein hierfür vorgesehenes, nicht dargestelltes Auffanggefäß geleitet werden kann.

Wenn das Restöl aus dem Gehäuse herausgelaufen ist, kann der Schraubdeckel 11 weiter abgeschraubt werden. Hierbei bilden die Nasen 25 der Axialfixierung einen Anschlag, wobei die Lösekraft dieser Axialfixierung größer ist als die der Schnappverbindung 23. Daher wird bei einem weiteren Abschrauben des Schraubdeckels die Schnappverbindung 23 gelöst, so daß das Stützrohr im Schraubdeckel verbleibt. Sofern die Endscheibe 21 b am Stützrohr eine größere Lösekraft besitzt, als am Stutzen 17, verbleibt auch diese im Schraubdeckel 11. Hierdurch läßt sich ein unproblematischer Wechsel der Filterpatrone erreichen.

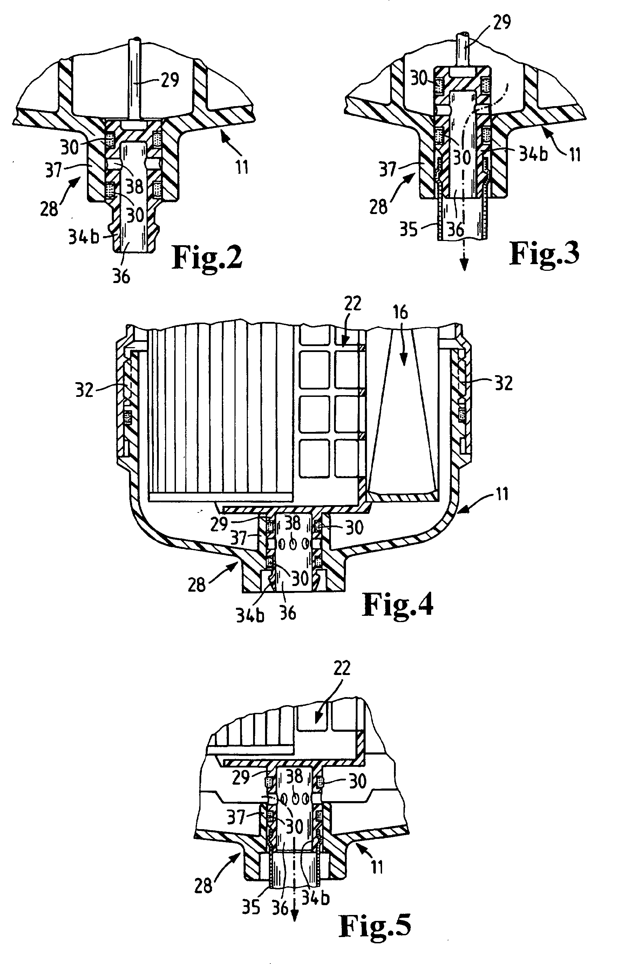

Die Figuren 2 und 3 stellen eine alternative Ausgestaltung des Ablasses 28 dar. Der Schlauchstutzen 34b ist in diesem Fall Teil der Ventilstange 29, die dadurch ein Auslaufende 36 bildet. Das Auslaufende ersetzt somit die Ablauföffnung 27 gemäß Figur 1. Die Öffnung im Schraubdeckel 11 dient somit nur als Durchführung 37 für das Auslaufende 36. Zur Verbindung des Auslaufendes 36 mit dem Innenraum des Gehäuses sind Durchbrüche 38 in dem rohrartigen Auslaufende vorgesehen. Während des Betriebs des Filters (Figur 2) werden diese Durchbrüche durch die Dichtungen 30 abgedichtet, wodurch ein Auslaufen von Öl verhindert wird. Entsprechend des in Figur 1 gezeigten Mechanismus wird durch Aufschrauben des Schraubdeckels eine Relativbewegung zwischen Ventilstange 29 und Durchführung 37 erreicht, wodurch die Durchbrüche 38 freigelegt werden. Damit kann das Öl über das Auslaufende und den auf den Schlauchstutzen 34b gesteckten Schlauch 35 ablaufen (in Figur 3 und 5 durch einen Pfeil angedeutet).

Die Figuren 4 und 5 zeigen ein weiteres Ausführungsbeispiel mit Auslaufende. Dieses ist ähnlich zu dem in Figur 2 dargestellten Ausführungsbeispiel aufgebaut, was durch gleiche Bezugszeichen gekennzeichnet ist. Der Unterschied ergibt sich dadurch, daß die Ventilstange 29 mit dem Stützrohr 22 fest in die Filterpatrone 16 integriert ist. Die Ausführungsform gemäß Figur 2, orientiert sich an dem Ausführungsbeispiel gemäß Figur 1, wobei die Ventilstange 29 Teil eines demontierbaren Mittelrohres ist. Daraus ergibt sich, daß das Stützrohr gemäß Figur 4 nicht zusammen mit dem Deckel, sondern zusammen mit der Patrone ausgebaut wird. Dies erklärt die anderen Abmessungen des Schraubdeckels 11, dessen Gewinde 32 im unteren Bereich der Filterpatrone 16 liegt. Diese Ausführungsform ist besonders einfach im Aufbau und daher kostengünstiger. Jedoch wird im Bereich unterhalb der Einbauöffnung 25 ein größerer Ausbaubereich für die Filterpatrone 16 benötigt.

## Patentansprüche

1. Flüssigkeitsfilter, insbesondere für das Schmieröl einer Brennkraftmaschine, welches ein Gehäuse (10) mit einem Einlaß (13) und einem Auslaß (14) für die zu filternde Flüssigkeit, bestehend aus einem mit einer Einbauöffnung (15) nach unten weisenden Gehäusetopf (12) und einem die Einbauöffnung verschließenden Schraubdeckel (11), aufweist, wobei in das Gehäuse eine Filterpatrone (16) den Einlaß (13) von dem Auslaß (14) dichtend voneinander trennend eingebaut ist und wobei der Schraubdeckel einen Ablaß (28) für Flüssigkeitsrückstände im Gehäuse aufweist, wobei der Ablaß eine Ventilstange (29) aufweist,
- deren Axialspiel im Bezug auf eine Mittelachse (33) des Gehäuses dadurch begrenzt ist, daß diese mit dem Gehäusetopf (12) verbunden ist,
- die eine in der Mittelachse (33) angeordnete, runde Ablauföffnung (27) dichtend verschließt und
- die in der Ablauföffnung (27) axial beweglich ist, wobei eine Dichtung (30) zwischen Ventilstange (29) und Ablauföffnung (27) vorgesehen ist, **dadurch gekennzeichnet, dass** die Ventilstange (29) mit einem Stützrohr (22) verbunden ist, welches seinerseits im Gehäusetopf (12) befestigt ist, wobei das Stützrohr (22) lösbar mit dem Gehäusetopf (12) verbunden ist und zusätzlich eine Axialfixierung (24) mit einem Axialspielbereich a zum Schraubdeckel (11) aufweist, wobei
- der Axialspielbereich a in Öffnungsrichtung des Schraubdeckels (11) einen Anschlag aufweist,
- der Axialspielbereich a größer ist als der zur Öffnung der Ablauföffnung (27) notwendige axiale Verschiebeweg der Ventilstange (29)
- der Anschlag eine lösbare Verbindung zwischen Stützrohr (22) und Schraubdeckel (11) darstellt, wobei die nötige Zugkraft zur Lösung dieser Verbindung größer ist, als die Zugkraft zur Lösung der Verbindung zwischen Stützrohr und Gehäusetopf (12).

2. Flüssigkeitsfilter nach Anspruch 1, **dadurch gekennzeichnet, dass** die Ablauföffnung (27) durch einen nach außen zeigenden Schlauchstutzen (34a) am Schraubdeckel (11) gebildet ist.

3. Flüssigkeitsfilter nach Anspruch 1, **dadurch gekennzeichnet, dass** die Ablauföffnung (27) durch ein rohrförmiges Auslaufende (36) der Ventilstange gebildet ist, wobei das Auslaufende in eine Durchführung (37) im Schraubdeckel hineinragt und die Rohrwand des Auslaufendes mit Durchbrüchen (38) versehen ist.

4. Flüssigkeitsfilter nach Anspruch 3, **dadurch gekennzeichnet, dass** das Auslaufende (36) als Schlauchstutzen ausgeführt ist.

5. Flüssigkeitsfilter nach einem der vorherigen Ansprüche, **dadurch gekennzeichnet, dass** ein Umgehungsventil (31) im Stützrohr (22) angeordnet ist.

6. Filterpatrone, ausgestattet mit einem in die Filterpatrone eingebrachten Stützrohr, wobei das Stützrohr lösbar oder unlösbar mit der Filterpatrone verbunden sein kann, zum Einbau in einen Flüssigkeitsfilter nach einem der vorhergehenden Ansprüche, und wobei die Ventilstange in das Stützrohr integriert ist, **dadurch gekennzeichnet, dass** das Stützrohr (22) derart ausgestaltet ist, dass es lösbar mit dem Gehäusetopf (12) verbindbar ist, und dass das Stützrohr Nasen zur Ausbildung einer Axialfixierung mit Axialspielbereich zum Schraubdeckel aufweist.

## Claims

1. Liquid filter, in particular for the lubricating oil of an internal combustion engine which features a housing (10) having an inlet (13) and an outlet (14) for the liquid to be filtered, consisting of a housing pot (12) pointing downward with a mounting opening (15) and a screw cap (11) closing the mounting opening, wherein a filter cartridge (16) sealingly separating the inlet (13) from the outlet (14) is installed in the housing and wherein the screw cap features a drain (28) for liquid residues in the housing, wherein the drain features a valve rod (29),
- the axial play of which with respect to a central axis (33) of the housing is limited because it is connected with the housing pot (12),
- which sealingly closes a round drain opening (27) disposed in the central axis (33), and
- which is axially movable in the drain opening (27), wherein a gasket (30) is provided between valve rod (29) and drain opening (27), **characterized in that** the valve rod (29) is connected with a support tube (22), which in turn is attached in the housing pot (12), wherein the support tube (22) is detachably connected with the housing pot (12) and features in addition an axial fixation (24) with an axial play area a with respect to the screw cap (11), wherein
- the axial play area a features in opening direction of the screw cap (11) a stop,
- the axial play area a is larger than the axial displacement path of the valve rod (29) necessary for opening the drain opening (27),
- the stop represents a detachable connection between support tube (22) and screw cap (11), wherein the required traction force for detaching this connection is stronger than the traction force for detaching the connection between support tube and housing pot (12).

2. Liquid filter according to claim 1, **characterized in that** the drain opening (27) is formed by a hose fitting (34a) pointing outwards at the screw cap (11).

3. Liquid filter according to claim 1, **characterized in that** the drain opening (27) is formed by a tubular discharge end (36) of the valve rod, wherein the discharge end protrudes into a feedthrough (37) in the screw cap and that the tube wall of the discharge end is provided with breakthroughs (38).

4. Liquid filter according to claim 3, **characterized in that** the discharge end (36) is designed as hose fitting.

5. Liquid filter according to one of the above claims, **characterized in that** a bypass valve (31) is disposed in the support tube (22).

6. Filter cartridge, equipped with a support tube introduced into the filter cartridge, wherein the support tube can be detachably or undetachably connected with the filter cartridge, for installation into a liquid filter according to one of the above claims, and wherein the valve rod is integrated in the support tube, **characterized in that** the support tube (22) is designed in such a way that it is detachably connectable with the housing pot (12), and that the support tube features lugs for realizing an axial fixation with axial play area with respect to the screw cap.

## Revendications

1. Filtre à liquide, notamment destiné à filtrer l'huile de lubrification d'une moteur à combustion interne, qui présente un boîtier (10) avec une entrée (13) et une sortie (14) pour le liquide à filtrer, composé d'un pot de boîtier (12) orienté vers le bas avec une ouverture de montage (15) et d'un couvercle vissé (11) obturant l'ouverture de montage, une cartouche filtrante (16) séparant de manière étanche l'entrée (13) de la sortie (14) étant montée dans le boîtier et le couvercle vissé présentant un écoulement (28) pour les résidus de liquide dans le boîtier, l'écoulement étant doté d'une tige de soupape (29),
- dont le jeu axial par rapport à un axe médian (33) du boîtier étant limité par le fait que cet axe est relié au pot de boîtier (12),
- qui obture de manière étanche une ouverture d'évacuation (27) ronde disposée dans l'axe médian (33), et
- qui est mobile en sens axial dans l'ouverture d'évacuation (27), un joint (30) étant prévu entre la tige de soupape (29) et l'ouverture d'évacuation (27), **caractérisé en ce que** la tige de soupape (29) est reliée à un tube de soutien (22) qui est fixé pour sa part dans le pot de boîtier (12), le tube de soutien (22) étant relié de manière amovible au pot de boîtier (12) et présentant par ailleurs une fixation axiale (24) avec une zone de jeu axial a par rapport au couvercle vissé (11),
- la zone de jeu axial a présentant une butée dans le sens d'ouverture du couvercle vissé (11),
- la zone de jeu axial a étant plus grande que la course de déplacement axiale de la tige de soupape (29) nécessaire pour ouvrir l'ouverture d'évacuation (27),
- la butée constituant une liaison amovible entre le tube de soutien (22) et le couvercle vissé (11), la force de traction nécessaire pour desserrer cette liaison étant supérieure à la force de traction nécessaire pour desserrer la liaison entre le tube de soutien et le pot de boîtier (12).

2. Filtre à liquide selon la revendication 1, **caractérisé en ce que** l'ouverture d'évacuation (27) est formée par une tubulure de tuyau (34a) dirigée vers l'extérieur et située sur le couvercle vissé (11).

3. Filtre à liquide selon la revendication 1, **caractérisé en ce que** l'ouverture d'évacuation (27) est formée par une extrémité de sortie (36) tubulaire de la tige de soupape, l'extrémité de sortie pénétrant dans une traversée (37) ménagée dans le couvercle vissé et la paroi du tube de l'extrémité de sortie étant pourvue d'ajours (38).

4. Filtre à liquide selon la revendication 3, **caractérisé en ce que** l'extrémité de sortie (36) est exécutée en tant que tubulure de tuyau.

5. Filtre à liquide selon l'une des revendications précédentes, **caractérisé en ce qu'**une soupape de dérivation (31) est disposée dans le tube de soutien (22).

6. Cartouche filtrante, équipée d'un tube de soutien intégré à la cartouche filtrante, le tube de soutien pouvant être lié à la cartouche filtrante de manière amovible ou inamovible, destinée à être montée dans un filtre à liquide selon l'une des revendications précédentes, et la tige de soupape étant intégrée dans le tube de soutien, **caractérisée en ce que** le tube de soutien (22) est exécuté de sorte qu'il puisse être relié de manière amovible au pot de boîtier (12) et que le tube de soutien présente des ergots destinés à former une fixation axiale avec une zone de jeu axial par rapport au couvercle vissé.
